# EUROPEAN PATENT APPLICATION

(11) **EP 4 527 790 A1**
(43) Date of publication of application: **26.03.2025**
(21) Application number: 23199163.9
(22) Date of filing: 22.09.2023
(51) Int. Cl.: C01B 3/04, B01D 53/047, C01B 3/50, C01B 21/04

(54) **PROCESS FOR PRODUCING A HYDROGEN PRODUCT AND A NITROGEN PRODUCT FROM AN AMMONIA FEED STREAM**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Bauer, André, 31545 Krakow (PL); Ulber, Dieter, 60439 Frankfurt (DE); Pedzich, Dominik, 31545 Krakow (PL); Schmidt, Sophia, 60439 Frankfurt (DE); Vicari, Lorenzo, 60439 Frankfurt (DE)
(74) Representative: Air Liquide

(57) **Abstract**

The invention relates to a process (100) for producing a hydrogen product and a nitrogen product from an ammonia feed stream, comprising the following steps:
• In a reactor, performing an endothermic cracking reaction of the ammonia feed stream (101) into a cracked gas comprising hydrogen and nitrogen,
• In a main separation unit, performing a main separation (102) of said cracked gas stream, thus producing:
- the hydrogen product,
- a main separation unit tail gas comprising nitrogen and a residual portion of hydrogen,

• In a secondary separation unit, performing a secondary separation (104) of the main separation unit tail gas into a secondary separation unit tail gas as the nitrogen product and a nitrogen depleted fuel stream
• Routing (115) said fuel stream to a furnace to provide heat to the endothermic cracking reaction.

## Description

The field of the present invention is that of a process for producing a hydrogen product and a nitrogen product by an endothermic cracking reaction of an ammonia feedstock stream. The invention also relates to an apparatus for producing a hydrogen product and a nitrogen product by an endothermic cracking reaction of an ammonia feedstock stream. The invention also relates to the use of such an apparatus for ammonia cracking.

The production of a hydrogen product by an endothermic cracking reaction of ammonia can comprise a separation step, separating the cracked gas from the endothermic reaction into a hydrogen product and a separation tail gas. This tail gas can then be used as a fuel that is combusted to provide heat to the endothermic reaction.

However, the tail gas still contains nitrogen, and a portion of ammonia that has not been cracked during the ammonia cracking reaction. Using this tail gas directly as a fuel then produces nitrogen oxides (NOx) in the combustion fumes.

The high portion of nitrogen N2, which is an inert gas, in the fuel stream also decreases lower heating value of the fuel and the flame stability, and increases the the fuel consumption and the steam export during the cooling of the combustion fumes.

The tail gas can also be separated into a nitrogen rich retentate and a nitrogen depleted hydrogen product.

The nitrogen rich retentate can then be exported as a fuel, with the aforementioned drawbacks. Alternatively, the nitrogen rich retentate can be vented to atmosphere.

The nitrogen depleted hydrogen product can then be mixed with the hydrogen product.

It is an aim of the present invention to overcome these problems and to provide a process in which the steam export is reduced, the production of nitrogen oxide is reduced, and in which the stability of the flame is improved.

For this purpose, the invention proposes a process for producing a hydrogen product and a nitrogen product from an ammonia feed stream, comprising the following steps:
- In a reactor, performing an endothermic cracking reaction of the ammonia feed stream into a cracked gas comprising hydrogen and nitrogen,
- In a main separation unit, performing a main separation of said cracked gas stream, thus producing:
   the hydrogen product,
   a main separation unit tail gas comprising nitrogen and
   a residual portion of hydrogen,
- In a secondary separation unit, performing a secondary separation of the main separation unit tail gas into a secondary separation unit tail gas as the nitrogen product and a nitrogen depleted fuel stream
- Routing said fuel stream to a fired equipment to provide a heat input to the process.

The invention may comprise at least one of the following features, taken independently or in combination:

Routing said fuel stream to a fired equipment comprises routing said fuel stream to a furnace to provide heat to the endothermic cracking reaction. Routing said fuel stream to a fired equipment may comprise routing said fuel stream to other devices such as an ammonia feed pre-heater for pre-heating the ammonia feed stream, a gas turbine and/or a water boiler for generating steam.

The process comprises a step of providing the ammonia feed stream to the reactor.

The process comprises a step of combusting the fuel stream in said furnace, thereby providing heat to the endothermic cracking reaction.

The cracked gas stream comprises an unconverted portion of ammonia that has not reacted during the cracking reaction.

The main separation comprises a step of removing unconverted ammonia from the cracked gas stream in an ammonia recovery unit, thus producing an unconverted ammonia stream and an ammonia depleted cracked gas.

For example, the step of removing unconverted ammonia from the cracked gas stream can be a wash process performed in a wash column.

The process comprises a step of feeding said unconverted ammonia stream to the reactor as an additional feed stream.

The main separation step comprises a first nitrogen separation step.

The first nitrogen separation step is a step of separating the ammonia depleted cracked gas and producing a nitrogen rich retentate stream and a nitrogen depleted permeate stream.

The main separation step comprises a step of drying said unconverted ammonia stream upstream of said first nitrogen separation step.

The first nitrogen separation step is performed in a first nitrogen separation unit.

For example, the first nitrogen separation step is performed by a first membrane separator.

The nitrogen rich retentate stream is at a high pressure, for example between 15 barg and 45 barg, more preferably between 20 barg and 30 barg.

The nitrogen depleted permeate stream is at a low pressure, for example between 1 barg and 10 barg, more preferably between 1 barg and 5 barg.

The main separation step comprises a purification step.

The purification step comprises purifying the nitrogen depleted permeate stream in a purification unit, thus producing the hydrogen product and the main separation unit tail gas.

The whole nitrogen depleted permeate stream is purified in the purification step.

In one embodiment, the main separation step comprises an extraction step, extracting a portion of the nitrogen depleted permeate stream upstream the purification step, thus creating an extracted nitrogen depleted stream.

The extraction step is performed by fluidically bifurcating said portion of the nitrogen depleted permeate stream.

The extraction step is performed with an extraction valve arranged to control the portion of the nitrogen depleted permeate stream bifurcated to form the extracted nitrogen depleted stream.

The purification step comprises a main compression step, comprising compressing at least a portion of the nitrogen depleted permeate stream, thus producing a compressed nitrogen depleted permeate stream, for example between 15 barg and 50 barg, more preferably between 20 barg and 30 barg.

The first compression step is performed in a first compressor.

In one embodiment, the purification step comprises separating the compressed nitrogen depleted permeate stream into the hydrogen product and the main separation unit tail gas by pressure swing adsorption, in a pressure swing adsorption unit (PSA unit).

The first nitrogen separation step advantageously reduces the portion of nitrogen in the permeate stream provided to the purification unit. This reduced portion of nitrogen increases the recovery ratio of the purification unit, meaning the proportion of hydrogen from the nitrogen depleted permeate stream that is recovered by the purification unit.

The purification step is arranged to adjust a certain required purity of the hydrogen product rather than to maximize the quantity of hydrogen recovered. As a result, the purification unit tail gas still comprises a non-negligible quantity of hydrogen.

The secondary separation step comprises a step of compressing the main separation unit tail gas, thus producing a compressed main separation unit tail gas at a pressure between 15 barg and 45 barg, more preferably between 20 barg and 30 barg.

The step of compressing the purification unit tail gas is performed in a second compressor.

The secondary separation step comprises a step of mixing the compressed main separation unit tail gas with the nitrogen rich retentate stream from the first nitrogen separation to form an intermediate tail gas.

The secondary separation step comprises a secondary nitrogen separation step.

The secondary nitrogen separation step is a step of separating the main separation unit tail gas or the intermediate tail gas and producing a secondary retentate stream as said nitrogen product and a secondary permeate stream.

For example, the secondary separation step is performed by a secondary membrane separator.

The secondary separation is arranged to adjust a certain required purity of the nitrogen product rather than to maximize the quantity of nitrogen recovered.

In one embodiment, the secondary permeate stream is mixed with the extracted nitrogen depleted stream, thus forming said fuel stream.

Alternatively, the secondary permeate stream is obtained as said fuel stream.

In another embodiment, no step of removing unconverted ammonia is performed during the main separation step.

The first nitrogen separation step then removes ammonia from the cracked gas.

The first nitrogen separation is then a step of separating the cracked gas stream, thus producing a nitrogen depleted permeate stream, and a nitrogen rich retentate stream comprising nitrogen and said removed ammonia.

In this embodiment, the main separation step does not produce an unconverted ammonia stream.

In another embodiment, the main separation step does not comprise a main nitrogen separation step.

The purification step then comprises purifying the ammonia depleted cracked gas from the ammonia recovery unit in a purification unit, thus producing the hydrogen product and the main separation unit tail gas.

Alternatively, when no step of removing unconverted ammonia is performed during the main separation step, the purification step comprises purifying the cracked gas stream, thus producing the hydrogen product and the main separation unit tail gas.

The process for producing a hydrogen product and a nitrogen product from a cracked gas stream comprising hydrogen, nitrogen and ammonia, comprises a control step, comprising controlling the lower heating value LHV of the fuel gas stream.

The control step is performed by a control unit.

The control step comprises maintaining the lower heating value of the fuel gas stream at or near a predetermined threshold necessary for a stable control.

The control step comprises at least a measuring step, performed by at least one sensor.

The control step comprises a step of measuring the composition of the fuel gas stream and transferring the obtained composition measurement to the control unit.

Alternatively or in addition, the control step comprises a step of measuring the flow rate of the fuel gas stream, and transferring the obtained flow rate measurement to the control unit.

The control step comprises a step of determining a control value from the measured composition and/or from the measured flow rate obtained during the measuring step.

This control value is linked to the lower heating value of the fuel gas stream in a way that maintaining the lower heating value of the fuel gas stream at or near a predetermined threshold is equivalent to maintaining the control value at or near a predetermined control threshold.

For example, the control value is an estimation of the Lower heating Value of the fuel gas stream.

When the control value is lower than the predetermined control threshold, the control step comprises a step of increasing the lower heating value of the fuel gas stream, wherein:
- the operating temperature of the secondary membrane separator is increased, thus increasing the hydrogen content in the composition of the fuel stream
- Alternatively or in addition, the output pressure of the secondary compressor is increased, thus increasing the hydrogen content in the composition of the fuel stream
- Alternatively or in addition, the extraction valve is controlled to increase the portion of the nitrogen depleted permeate stream extracted to form the fuel stream.

When the control value is higher than the predetermined control threshold, the control step comprises a step of decreasing the lower heating value of the fuel gas stream, wherein:
- the operating temperature of the secondary membrane separator is reduced, thus decreasing the level of hydrogen in the composition of the nitrogen depleted fuel stream
- alternatively or in addition, the output pressure of the secondary compressor is reduced, thus decreasing the level of hydrogen in the composition of the nitrogen depleted fuel stream
- Alternatively or in addition, the extraction valve is controlled to reduce the portion of the nitrogen depleted permeate stream extracted to form the nitrogen depleted fuel stream.

In one embodiment, the control step comprises:
- a step of decreasing an amount of extracted nitrogen depleted stream provided to the fired equipment when the control value is higher than the predetermined control threshold,
- and/or a step of increasing an amount of extracted nitrogen depleted stream provided to the fired equipment when the control value is lower than the predetermined control threshold.

The invention also relates to an apparatus for producing a hydrogen product and a nitrogen product from an ammonia feed stream, said apparatus comprising:
- A reactor for performing an endothermic cracking reaction of an ammonia feed stream into a cracked gas comprising hydrogen and nitrogen,
- A fired equipment arranged for generating heat,
- A main separation unit arranged for performing a main separation of a cracked gas stream into the hydrogen product and a main separation unit tail gas comprising nitrogen, a remaining portion of hydrogen,
- A secondary separation unit, arranged for performing a secondary separation separating the main separation unit tail gas into a nitrogen product and a nitrogen depleted fuel stream
- A fuel line connecting the secondary separation unit with the fired equipment and arranged for routing the fuel stream to the fired equipment.

The invention may comprise at least one of the following features, taken independently or in combination:

Said fired equipment comprises a furnace arranged in thermal communication with said reactor, for providing heat to the endothermic cracking reaction. Said fired equipment may comprise other devices such as an ammonia feed pre-heater, a gas turbine and/or a water boiler.

The apparatus comprises an ammonia feed stream duct arranged to feed the ammonia feed stream to the reactor.

The furnace is arranged to perform a combustion of said fuel stream, thereby providing heat to the reactor.

The apparatus comprises a cracked gas duct arranged for the circulation of the cracked gas from the reactor to the main separation unit.

The main separation unit comprises an ammonia recovery unit arranged to remove unconverted ammonia from the cracked gas stream, thus producing an unconverted ammonia stream and an ammonia depleted cracked gas.

For example, the ammonia recovery unit can be a wash column arranged to perform a wash process.

The apparatus comprises an unconverted ammonia stream duct arranged for the circulation of the unconverted ammonia stream from the ammonia recovery unit to the reactor.

The main separation unit comprises a first nitrogen separation unit arranged to perform a main nitrogen separation step.

The apparatus comprises an ammonia depleted cracked gas duct arranged for the circulation of the ammonia depleted cracked gas from the ammonia recovery unit to the first nitrogen separation unit.

The first nitrogen separation unit is arranged to separate the ammonia depleted cracked gas, thus producing a nitrogen rich retentate stream and a nitrogen depleted permeate stream.

For example, the first nitrogen separation unit is a first membrane separator.

The first membrane separator may comprise only a single membrane separation unit.

Alternatively, the first membrane separator comprises a plurality of membrane separation units in series.

The apparatus comprises a nitrogen rich retentate stream duct arranged for the circulation of the nitrogen rich retentate stream.

The main separation unit comprises a purification arranged to purify the nitrogen depleted permeate stream, thus producing the hydrogen product and the main separation unit tail gas.

The apparatus comprises a nitrogen depleted permeate stream duct arranged for the circulation of the nitrogen depleted permeate stream from the first nitrogen separation unit to the purification unit.

In one embodiment, the apparatus comprises an extraction valve arranged to perform an extraction step, extracting a portion of the nitrogen depleted permeate stream upstream the purification unit, thus creating an extracted nitrogen depleted stream.

The extraction valve is arranged to fluidically bifurcate said portion of the nitrogen depleted permeate stream circulating in the nitrogen depleted stream duct to an extracted nitrogen depleted stream duct arranged for the circulation of said extracted nitrogen depleted stream.

The extraction valve is arranged to control the portion of the nitrogen depleted permeate stream bifurcated to form the extracted nitrogen depleted stream.

The purification unit comprises a first compressor arranged to compress at least a portion of the nitrogen depleted permeate stream, thus producing a compressed nitrogen depleted permeate stream.

The purification unit comprises a pressure swing adsorption unit (PSA unit) arranged to separate the compressed nitrogen depleted permeate stream into the hydrogen product and the main separation unit tail gas by pressure swing adsorption.

The first nitrogen separation unit advantageously reduces the portion of nitrogen in the permeate stream provided to the purification unit. This reduced portion of nitrogen increases the recovery ratio of the purification unit, meaning the proportion of hydrogen from the nitrogen depleted permeate stream that is recovered by the purification unit.

Advantageously, the reduced portion of nitrogen in the nitrogen depleted permeate stream also allows to downsize the purification unit.

The main separation unit comprises a hydrogen duct arranged for the circulation of the hydrogen product.

The main separation unit comprises a tail gas duct arranged for the circulation of the main separation unit tail gas.

The secondary separation unit comprises a second compressor arranged to compress the main separation unit tail gas, thus producing a compressed main separation unit tail gas.

The secondary separation unit comprises a compressed tail gas duct arranged for the circulation of the compressed main separation unit tail gas.

The compressed tail gas duct is fluidically connected to the nitrogen rich retentate stream duct thus forming an intermediate tail gas duct arranged for the circulation of an intermediate tail gas comprising the compressed main separation unit tail gas and the nitrogen rich retentate stream.

The secondary separation unit comprises a secondary nitrogen separation unit arranged to separate the main separation unit tail gas or the intermediate tail gas, thus producing a secondary retentate stream as said nitrogen product and a secondary permeate stream.

The intermediate tail gas duct is fluidically connected to the secondary nitrogen separation unit.

For example, the secondary separation unit is a membrane separator.

The membrane separator comprises a single membrane separation unit.

Alternatively, the secondary membrane separator comprises a plurality of membrane separation units in series.

The secondary separation unit is arranged to maximize the purity of the nitrogen product rather than to maximize the quantity of nitrogen recovered.

The fuel line is fluidically connecting the secondary separation unit with the fired equipment and arranged for routing the nitrogen depleted fuel stream to the fired equipment.

In one embodiment, the extracted nitrogen depleted stream duct is fluidically connected to the fuel line.

In another embodiment, the first nitrogen separation unit is arranged to remove ammonia from the cracked gas. The main separation unit then doesn't comprise an ammonia recovery unit.

The first nitrogen separation unit is then arranged to separate the cracked gas stream, thus producing a nitrogen depleted permeate stream, and a nitrogen rich retentate stream comprising nitrogen and said removed ammonia.

In this embodiment, the main separation unit does is not configured to produce an unconverted ammonia stream.

In another embodiment, the main separation unit does not comprise a main nitrogen separation unit.

The purification unit is then arranged to purify the ammonia depleted cracked gas from the ammonia recovery unit, thus producing the hydrogen product and the main separation unit tail gas.

Alternatively, when the main separation unit does not comprise an ammonia recovery unit, the purification unit is arranged to purify the cracked gas stream, thus producing the hydrogen product and the main separation unit tail gas.

The apparatus comprises a control unit, arranged to control the lower heating value LHV of the fuel gas stream.

The control unit is arranged to maintaining the lower heating value of the fuel gas stream at or near a predetermined threshold necessary for a stable control.

The control unit is arranged to determine the lower heat value of the fuel gas stream.

The apparatus comprises at least one sensor arranged to perform a measuring step and to transfer the measured value to the control unit.

The apparatus comprises a composition sensor arranged to measure the composition of the fuel gas stream, and to transfer the obtained composition measurement to the control unit.

Alternatively or in addition, apparatus comprises a flow rate sensor arranged to measure the flow rate of the fuel gas stream, and to transfer the obtained flow rate measurement to the control unit.

The control unit is arranged to determine a control value from the values measured by the sensors, particularly by the flow rate sensor and/or the composition sensor.

This control value is linked to the lower heating value of the fuel gas stream in a way that maintaining the lower heating value of the fuel gas stream at or near a predetermined threshold is equivalent to maintaining the control value at or near a predetermined control threshold.

For example, the control value is an estimation of the Lower heating Value of the fuel gas stream.

When the control value is lower than the predetermined control threshold, the control unit is arranged to increase the lower heating value of the fuel gas stream by:
- Increasing the operating temperature of the secondary membrane separator, thus increasing the hydrogen content in the composition of the nitrogen depleted fuel stream
- Alternatively or in addition, increasing the output pressure of the secondary compressor, thus increasing the hydrogen content in the composition of the nitrogen depleted fuel stream
- Alternatively or in addition, controlling the extraction valve to increase the portion of the nitrogen depleted permeate stream extracted to form the nitrogen depleted fuel stream.

When the control value is higher than the predetermined control threshold, the control unit is arranged to decrease the lower heating value of the fuel gas stream by:
- reducing the operating temperature of the secondary membrane separator, thus decreasing the level of hydrogen in the composition of the nitrogen depleted fuel stream,
- alternatively or in addition, reducing the output pressure of the secondary compressor, thus decreasing the level of hydrogen in the composition of the nitrogen depleted fuel stream,
- alternatively or in addition, controlling the extraction valve to reduce the portion of the nitrogen depleted permeate stream extracted to form the nitrogen depleted fuel stream.

In one embodiment, the control unit is arranged to:
- decrease the amount of extracted nitrogen depleted stream provided to the fired equipment when the control value is higher than the predetermined control threshold,
- increasing the amount of extracted nitrogen depleted stream provided to the fired equipment when the control value is lower than the predetermined control threshold.

Further features, details and advantages of the invention will become more clearly apparent from reading the description given below by way of indication with reference to the drawings, in which:
[Fig 1] is a schematic view of the process according to a first embodiment of the invention,
[Fig 2] is a schematic view of the process according to a second embodiment of the invention,
[Fig 3] is a schematic view of the process according to a third embodiment of the invention,
[Fig 4] is a schematic view of the process according to a fourth embodiment of the invention,
[Fig 5] is a schematic view of the apparatus according to a first embodiment of the invention,
[Fig 6] is a schematic view of the apparatus according to a second embodiment of the invention,
[Fig 7] is a schematic view of the apparatus according to a third embodiment of the invention,
[Fig 8] is a schematic view of the apparatus according to a fourth embodiment of the invention,

The process comprises a step of providing an ammonia feed stream to a reactor, and a step of performing cracking reaction of the ammonia feed stream into a cracked gas comprising hydrogen and nitrogen.

The cracked gas stream comprises an unconverted portion of ammonia that has not reacted during the cracking reaction.

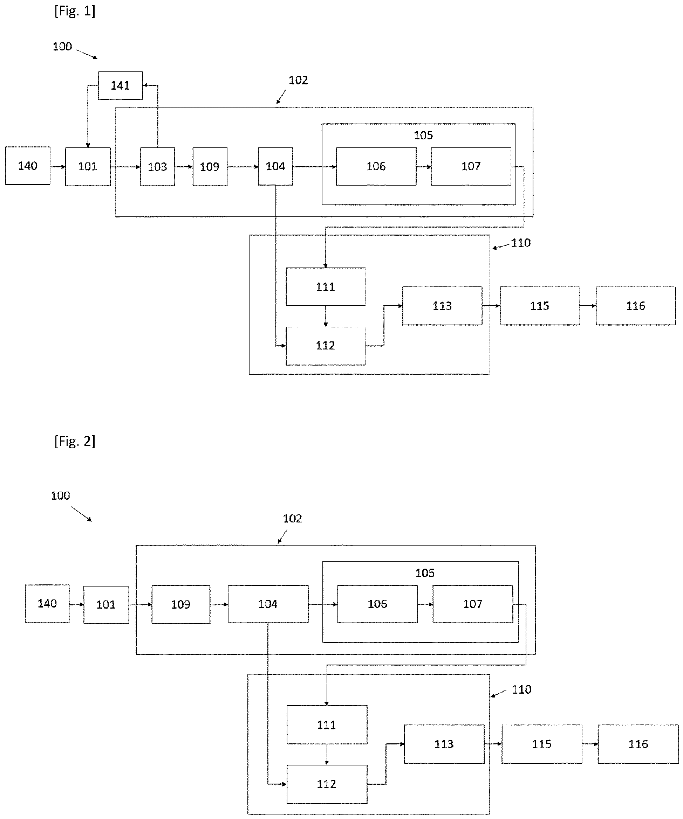

[Fig 1] is a schematic view of the process according to a first embodiment of the invention.

The term fired equipment denotes that the combustion is made with the formation of a flame.

The process 100 comprises a step of providing the ammonia feed stream to a reactor 140.

The process comprises a step of performing in said reactor an endothermic cracking reaction 101 of the ammonia feed stream into a cracked gas comprising hydrogen and nitrogen,

The process 100 comprises a step of performing a main separation 102 of said cracked gas stream, thus producing the hydrogen product and a main separation unit tail gas comprising nitrogen and a residual portion of hydrogen,

The main separation 102 comprises a step of removing unconverted ammonia 103 from the cracked gas stream in an ammonia recovery unit, thus producing an unconverted ammonia stream and an ammonia depleted cracked gas

The process 100 comprises a step of feeding said unconverted ammonia stream to the reactor 141 as an additional feed stream.

For example, the step of removing unconverted ammonia 103 from the cracked gas stream can be a wash process performed in a wash column.

The main separation step 102 comprises a first nitrogen separation step 104 in a first nitrogen separation unit, separating the ammonia depleted cracked gas into a nitrogen rich retentate stream and a nitrogen depleted permeate stream.

The main separation step comprises a step of drying 109 said unconverted ammonia stream upstream of said first nitrogen separation step 104.

The main separation step 102 comprises a purification step 105 of purifying the nitrogen depleted permeate stream in a purification unit, thus producing the hydrogen product and the main separation unit tail gas.

In this embodiment, the whole nitrogen depleted permeate stream is purified in the purification step.

The purification step comprises:
- a main compression step 106, consisting in compressing at least a portion of the nitrogen depleted permeate stream in a first compressor, thus producing a compressed nitrogen depleted permeate stream,
- a step of separating the compressed nitrogen depleted permeate stream 107 into the hydrogen product and the main separation unit tail gas by pressure swing adsorption, in a pressure swing adsorption unit (PSA unit).

The process comprises a secondary separation 110 of the main separation unit tail gas into a secondary separation unit tail gas as the nitrogen product and a nitrogen depleted fuel stream.

The secondary separation comprises:
- a step of compressing the main separation unit tail 111 gas in a secondary compressor, thus producing a compressed main separation unit tail gas
- a step of mixing 112 the compressed main separation unit tail gas with the nitrogen rich retentate stream from the first nitrogen separation to form an intermediate tail gas.
- a secondary nitrogen separation step 113 separating the main separation unit tail gas or the intermediate tail gas and producing a secondary retentate stream as said nitrogen product and a secondary permeate stream.

The process comprises a step of routing 115 said fuel stream to a furnace to provide heat to the endothermic cracking reaction, the fuel stream comprising the secondary permeate.

The process comprises a step of combusting 116 the fuel stream in said furnace, thereby providing heat to the endothermic cracking reaction. The furnace is arranged in thermal communication with the reactor 141. For example, the furnace and the reactor 141 are arranged as an autothermal ammonia cracker. Alternatively, the reactor 141 may comprise one or more catalyst filled tubes, extending through the furnace.

[Fig 2] is a schematic view of the process 100 according to a second embodiment of the invention, where no step of removing unconverted ammonia 103 is performed during the main separation step 102.

The first nitrogen separation step 104 then removes ammonia from the cracked gas, and separates the cracked gas stream, thus producing a nitrogen depleted permeate stream, and a nitrogen rich retentate stream comprising nitrogen and said removed ammonia.

The main separation 102 step then does not produce an unconverted ammonia stream.

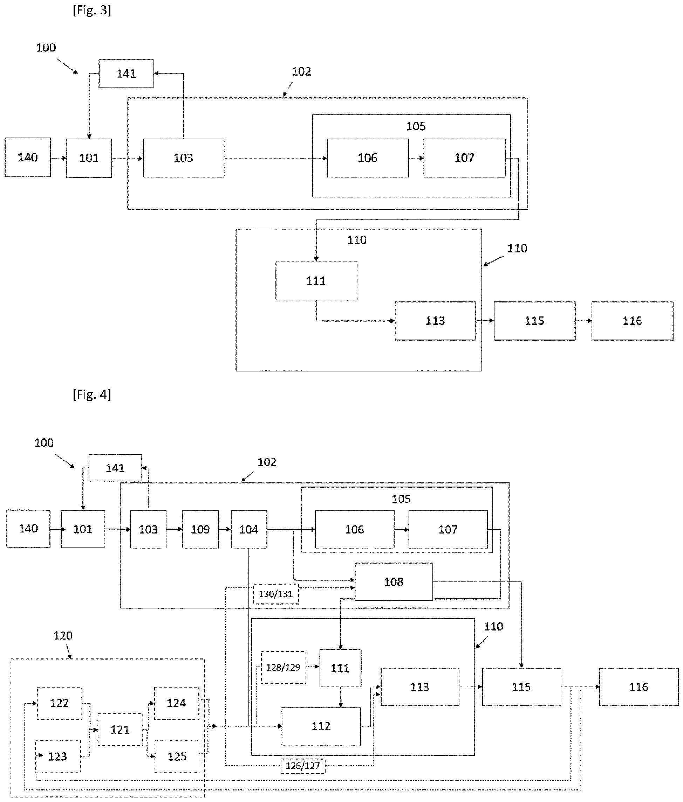

[Fig 3] is a schematic view of the process 100 according to a third embodiment of the invention, where the main separation step does not comprise a main nitrogen separation step 104.

The purification step 103 then comprises purifying the ammonia depleted cracked gas from the ammonia recovery unit in a purification unit, thus producing the hydrogen product and the main separation unit tail gas.

Alternatively, in an embodiment not represented where no step of removing unconverted ammonia is performed during the main separation step, the purification step comprises purifying the cracked gas stream, thus producing the hydrogen product and the main separation unit tail gas.

[Fig4] is a schematic view of the process 100 according to a third embodiment of the invention, where the process 100 comprises an extraction step 108 and a control step 120.

The main separation step 102 comprises an extraction step performed with an extraction valve, extracting a portion of the nitrogen depleted permeate stream upstream the purification step, thus creating an extracted nitrogen depleted stream.

The extraction step 108 is performed by fluidically bifurcating said portion of the nitrogen depleted permeate stream.

The secondary permeate stream is mixed with the extracted nitrogen depleted stream, thus forming said fuel stream.

The process also comprises a control step 120 performed by a control unit, consisting in controlling the lower heating value LHV of the fuel gas stream.

The control step 120 consists in maintaining the lower heating value of the fuel gas stream at or near a predetermined threshold necessary for a stable control.

The control step 120 comprises:
- a step of measuring the composition of the fuel gas stream and transferring the obtained composition measurement to the control unit 122.
- a step of measuring the flow rate of the fuel gas stream and transferring the obtained flow rate measurement to the control unit 123.
- a step determining a control value 121 from the measured composition and/or from the measured flow rate.

When the control value is lower than the predetermined control threshold, the control step comprises a step of increasing the lower heating value of the fuel gas stream 124, consisting in:
- increasing the operating temperature of the secondary membrane separator 126, thus increasing the hydrogen content in the composition of the nitrogen depleted fuel stream
- alternatively or in addition, increasing the output pressure of the secondary compressor 128, thus increasing the hydrogen content in the composition of the nitrogen depleted fuel stream
- alternatively or in addition, controlling the extraction valve to increase the portion of the nitrogen depleted permeate stream extracted to form the nitrogen depleted fuel stream 130.

When the control value is higher than the predetermined control threshold, the control step comprises a step of decreasing the lower heating value of the fuel gas stream 125, consisting in:
- reducing the operating temperature of the secondary membrane separator 127, thus decreasing the level of hydrogen in the composition of the nitrogen depleted fuel stream
- alternatively or in addition, reducing the output pressure of the secondary compressor 129, thus decreasing the level of hydrogen in the composition of the nitrogen depleted fuel stream
- Alternatively or in addition, controlling the extraction valve to reduce the portion of the nitrogen depleted permeate stream extracted to form the nitrogen depleted fuel stream 131.

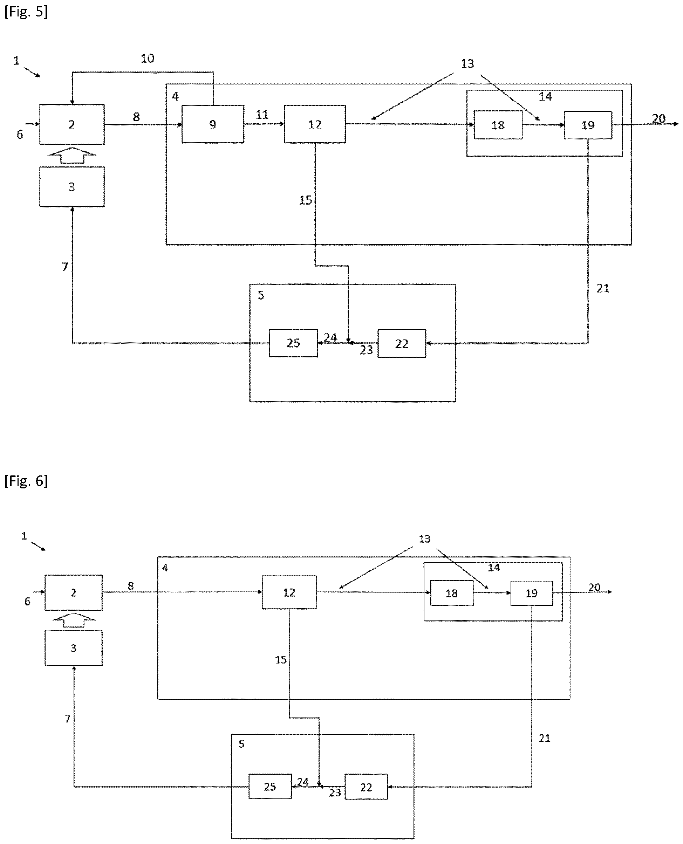

[Fig 5] is a schematic view of the apparatus 1 according to a first embodiment of the invention.

The apparatus 1 comprises a reactor 2 for performing an endothermic cracking reaction of an ammonia feed stream into a cracked gas comprising hydrogen and nitrogen, and an ammonia feed stream duct 6 arranged to feed the ammonia feed stream to the reactor.

A main separation unit 9 is arranged for performing a main separation of the cracked gas stream into the hydrogen product and a main separation unit tail gas comprising nitrogen, and a remaining portion of hydrogen.

A cracked gas duct 8 is arranged for the circulation of the cracked gas from the reactor to a main separation unit 4.

The main separation unit 4 comprises an ammonia recovery unit 9 arranged to remove unconverted ammonia from the cracked gas stream, thus producing an unconverted ammonia stream and an ammonia depleted cracked gas.

The ammonia recovery unit 9 is for example a wash column arranged to perform a wash process.

An unconverted ammonia stream duct 10 is arranged for the circulation of the unconverted ammonia stream from the ammonia recovery unit 9 to the reactor 2, and an ammonia depleted cracked gas duct 11 is arranged for the circulation of the ammonia depleted cracked gas from the ammonia recovery unit 9 to a first nitrogen separation unit 12.

The first nitrogen separation unit 12 is a first membrane separator arranged to separate the ammonia depleted cracked gas, thus producing a nitrogen rich retentate stream and a nitrogen depleted permeate stream.

A nitrogen depleted permeate stream duct 13 is arranged for the circulation of the nitrogen depleted permeate stream from the first nitrogen separation unit 12 to a purification unit 14, and a nitrogen rich retentate stream duct 15 is arranged for the circulation of the nitrogen rich retentate stream.

The purification unit 14 is arranged to purify the nitrogen depleted permeate stream, thus producing the hydrogen product and the main separation unit tail gas.

The purification unit comprises:
- a first compressor 18 compressing at the nitrogen depleted permeate stream,
- a pressure swing adsorption unit (PSA unit) 19 separating the compressed nitrogen depleted permeate stream into the hydrogen product and the main separation unit tail gas.

The first nitrogen separation unit 12 advantageously reduces the portion of nitrogen in the permeate stream provided to the purification unit, thus increasing the recovery ratio of the main separation unit 12 and allowing to downsize the purification unit.

A hydrogen duct 20 is arranged for the circulation of the hydrogen product, and a tail gas duct 21 is arranged for the circulation of the main separation unit tail gas to a secondary separation unit 5.

The secondary separation unit 5 is arranged for performing a secondary separation, separating the main separation unit tail gas into a nitrogen product and a nitrogen depleted fuel stream

The secondary separation unit 5, comprising:
- a second compressor 22 arranged to compress the main separation unit tail gas,
- a compressed tail gas duct 23 arranged for the circulation of the compressed tail gas,
- a secondary nitrogen separation unit 25 arranged to separate the main separation unit tail gas or the intermediate tail gas, thus producing a secondary retentate stream and a secondary permeate stream.

The secondary nitrogen separation unit 25 is a membrane separator.

The compressed tail gas duct 23 is fluidically connected to the nitrogen rich retentate stream duct 15 thus forming an intermediate tail gas duct 24 arranged for the circulation of an intermediate tail gas comprising the compressed main separation unit tail gas and the nitrogen rich retentate stream to the secondary nitrogen separation unit 25.

A fuel line 7 is fluidically connecting the secondary separation unit 25 with the furnace 3 and arranged for routing the secondary permeate stream to a furnace as a nitrogen depleted fuel stream.

The furnace 3 is in thermal communication with the reactor 2 and performs a combustion of said fuel stream, thereby providing heat to said reactor.

[Fig 6] is a schematic view of the apparatus 1 according to a second embodiment of the invention, where the main separation unit 4 doesn't comprise an ammonia recovery unit. The first nitrogen separation unit 12 is then arranged to remove ammonia from the cracked gas, and the main separation unit 4 does not produce an unconverted ammonia stream.

The first nitrogen separation unit 12 is arranged to separate the cracked gas stream, thus producing a nitrogen depleted permeate stream, and a nitrogen rich retentate stream comprising nitrogen and said removed ammonia.

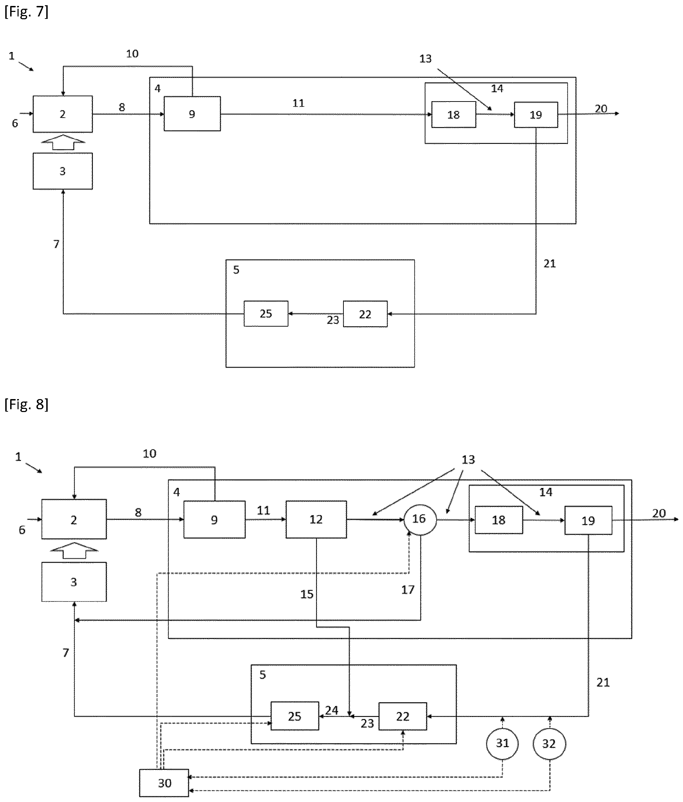

[Fig 7] is a schematic view of the apparatus 1 according to a third embodiment of the invention, where the purification unit 14 is arranged to purify the ammonia depleted cracked gas from the ammonia recovery unit 9.

The main separation unit 4 does not comprise a main nitrogen separation unit.

In an embodiment not represented where the main separation unit does not comprise an ammonia recovery unit, the purifying unit is arranged to purify the cracked gas stream, thus producing the hydrogen product and the main separation unit tail gas.

[Fig8] is a schematic view of the apparatus 1 according to a third embodiment of the invention, where the apparatus comprises:
- a control unit 30, arranged to control the lower heating value LHV of the fuel gas stream, and to maintain it at or near a predetermined threshold necessary for a stable control,
- an extraction valve 16 arranged to extract a portion of the nitrogen depleted permeate stream upstream the purification unit 14, thus creating an extracted nitrogen depleted stream.

The extraction valve 16 is arranged to fluidically bifurcate a controlled portion of the nitrogen depleted permeate stream to an extracted nitrogen depleted stream duct 17.

The extracted nitrogen depleted stream duct 17 is fluidically connected to the fuel line 7, and the nitrogen fuel stream comprises the secondary permeate stream in addition with the extracted nitrogen depleted stream.

The apparatus 1 comprises:
- a composition sensor 31 arranged to measure the composition of the fuel gas stream, and to transfer the obtained composition measurement to the control unit 30.
- a flow rate sensor 32 arranged to measure the flow rate of the fuel gas stream, and to transfer the obtained flow rate measurement to the control unit 30.

The control unit 30 determines a control value linked to the lower heating value of the fuel gas stream from the values measured by the sensors.

When the control value is lower than a predetermined control threshold, the control unit 30 is arranged to increase the lower heating value of the fuel gas stream by:
- Increasing the operating temperature of the secondary membrane separator 25, thus increasing the hydrogen content in the composition of the nitrogen depleted fuel stream
- Alternatively or in addition, increasing the output pressure of the secondary compressor 22, thus increasing the hydrogen content in the composition of the nitrogen depleted fuel stream
- Alternatively or in addition, controlling the extraction valve 16 to increase the portion of the nitrogen depleted permeate stream extracted to form the nitrogen depleted fuel stream.

When the control value is higher than a predetermined control threshold, the control unit 30 is arranged to decrease the lower heating value of the fuel gas stream by:
- reducing the operating temperature of the secondary membrane separator 25, thus decreasing the level of hydrogen in the composition of the nitrogen depleted fuel stream,
- alternatively or in addition, reducing the output pressure of the secondary compressor 22, thus decreasing the level of hydrogen in the composition of the nitrogen depleted fuel stream,
- alternatively or in addition, controlling the extraction valve 16 to reduce the portion of the nitrogen depleted permeate stream extracted to form the nitrogen depleted fuel stream.

The control unit 30 is arranged to:
- decrease the amount of extracted nitrogen depleted stream provided to the furnace 3 when the control value is higher than the predetermined control threshold,
- increase the amount of extracted nitrogen depleted stream provided to the furnace 30 when the control value is lower than the predetermined control threshold.

## Claims

1. Process (100) for producing a hydrogen product and a nitrogen product from an ammonia feed stream, comprising the following steps:
• in a reactor, performing an endothermic cracking reaction of the ammonia feed stream (101) into a cracked gas comprising hydrogen and nitrogen,
• in a main separation unit, performing a main separation (102) of said cracked gas stream, thus producing:
- the hydrogen product,
- a main separation unit tail gas comprising nitrogen and a residual portion of hydrogen,
• in a secondary separation unit, performing a secondary separation (110) of the main separation unit tail gas into a secondary separation unit tail gas as the nitrogen product and a nitrogen depleted fuel stream,
• routing (115) said fuel stream to a fired equipment to provide a heat input to the process.

2. Process (100) according to claim 1, wherein the main separation step (102) comprises a step of removing unconverted ammonia (103) from the cracked gas stream in an ammonia recovery unit, thus producing an unconverted ammonia stream and an ammonia depleted cracked gas.

3. Process (100) according to claim 2, wherein the main separation step (102) comprises a first nitrogen separation step (104), comprising separating the ammonia depleted cracked gas and producing a nitrogen rich retentate stream and a nitrogen depleted permeate stream.

4. Process (100) according to claim 1, wherein the main separation step (102) comprises a first nitrogen separation step (104) comprising separating the cracked gas stream, thus producing a nitrogen depleted permeate stream, and a nitrogen rich retentate stream comprising nitrogen and said removed ammonia.

5. Process (100) according to claim 3 or 4, wherein the main separation step (102) comprises a purification step (105), comprising purifying the nitrogen depleted permeate stream in a purification unit, thus producing a hydrogen product and the main separation unit tail gas.

6. Process (100) according to claim 2, wherein the main separation step (102) comprises a purification step (105), comprising purifying the ammonia depleted cracked gas from the ammonia recovery unit in a purification unit, thus producing the hydrogen product and the main separation unit tail gas.

7. Process (100) according to one of claims 3 to 5, wherein the main separation step (102) comprises an extraction step (108) of extracting a portion of the nitrogen depleted permeate stream upstream the purification step (105), thus creating an extracted nitrogen depleted stream.

8. Process (100) according to one of claim 2 to 7, wherein the purification step (105) comprises a main compression step (106), comprising compressing at least a portion of the nitrogen depleted permeate stream, or of the ammonia depleted cracked gas, thus producing a compressed nitrogen depleted permeate stream.

9. Process (100) according to claim 8, where the purification step (105) comprises separating the compressed nitrogen depleted permeate stream (107) into the hydrogen product and the main separation unit tail gas by pressure swing adsorption, in a pressure swing adsorption unit (PSA unit).

10. Process (100) according to any of the preceding claims, wherein the secondary separation step (110) comprises a step of compressing the main separation unit tail gas (111), thus producing a compressed main separation unit tail gas.

11. Process (100) according to any of the preceding claims, wherein the process comprises a control step (120) performed by a control unit comprising controlling the lower heating value LHV of the fuel gas stream.

12. Process (100) according to claims 11 and 7, wherein the control step (120) comprises:
- a step of decreasing an amount of extracted nitrogen depleted stream provided to the fired equipment (130) when the control value is higher than the predetermined control threshold,
- and/or a step of increasing an amount of extracted nitrogen depleted stream provided to the fired equipment (131) when the control value is lower than the predetermined control threshold.

13. Process (100) according to any of the preceding claims, wherein routing (115) said fuel stream to a fired equipment comprises routing (115) said fuel stream to a furnace to provide heat to the endothermic cracking reaction.

14. Apparatus (1) for producing a hydrogen product and a nitrogen product from an ammonia feed stream, said apparatus comprising:
- a reactor (2) for performing an endothermic cracking reaction of an ammonia feed stream into a cracked gas comprising hydrogen and nitrogen,
- a fired equipment (3) arranged for generating heat,
- a main separation unit (4) arranged for performing a main separation of a cracked gas stream into the hydrogen product and a main separation unit tail gas comprising nitrogen, and a remaining portion of hydrogen,
- a secondary separation unit (5), arranged for performing a secondary separation separating the main separation unit tail gas into a nitrogen product and a nitrogen depleted fuel stream,
- a fuel line (7) connecting the secondary separation unit with the fired equipment and arranged for routing the fuel stream to the fired equipment.

15. Apparatus (1) according to the previous claim, wherein the fired equipment comprises a furnace arranged in thermal communication with said reactor (2), for providing heat to the endothermic cracking reaction.
